# EUROPÄISCHE PATENTSCHRIFT

(11) **EP 1 379 404 B1**
(45) Veröffentlichungstag und Bekanntmachung des Hinweises auf die Patenterteilung: **14.01.2009**
(21) Anmeldenummer: 02747276.0
(22) Anmeldetag: 12.04.2002
(51) Int. Cl.: B60J 10/08, B60J 10/00

(54) **SPALTDICHTUNGSANORDNUNG**
GAP SEALING ARRANGEMENT
SYSTEME D'ETANCHEITE DE FENTE

(30) Priorität: 19.04.2001 DE 20106758 U
(43) Veröffentlichungstag der Anmeldung: 14.01.2004
(73) Patentinhaber: Meteor Gummiwerke K.H. Bädje GmbH & Co. KG, 31167 Bockenem (DE)
(72) Erfinder: AHLERS, Burkhard, 22941 Bargteheide (DE); KOCH, Michael, 37589 Kalefeld (DE); MUMME, Edgar, 31139 Hildesheim (DE)
(74) Vertreter: Sobisch, Peter
(86) Internationale Anmeldenummer: PCT/EP2002/004111
(87) Internationale Veröffentlichungsnummer: WO 2002/085657

(56) Entgegenhaltungen:
- EP-A- 0 058 599
- EP-A- 0 788 913
- EP-A- 1 078 800
- DE-A- 19 747 942
- DE-A- 19 803 445
- US-A- 2 622 286
- US-A- 4 858 385
- US-A- 5 462 292
- US-A- 5 950 366
- PATENT ABSTRACTS OF JAPAN vol. 008, no. 201 (M-325), 14. September 1984 (1984-09-14) & JP 59 089220 A (KINUGAWA GOMU KOGYO KK), 23. Mai 1984 (1984-05-23)
- PATENT ABSTRACTS OF JAPAN vol. 1998, no. 14, 31. Dezember 1998 (1998-12-31) & JP 10 236163 A (NISHIKAWA RUBBER CO LTD), 8. September 1998 (1998-09-08)
- PATENT ABSTRACTS OF JAPAN vol. 007, no. 246 (M-253), 2. November 1983 (1983-11-02) & JP 58 133918 A (KINUGAWA GOMU KOGYO KK), 9. August 1983 (1983-08-09)

## Beschreibung

Die Erfindung betrifft eine Dichtungsanordnung nach dem Oberbegriff des Anspruchs 1.

Bei einer bekannten Dichtungsanordnung dieser Art (DE 199 12 176 A1) ist ein im Querschnitt im Wesentlichen L-förmiges Profilteil mit eingebetteter Armierung Ober eine Kleberschicht mit einem Türrahmen verklebt. Das Profilteil stützt sich jenseits der Kleberschicht mit Stegen auf dem Türrahmen ab. Anstelle der Kleberschicht kann das Profilteil auch durch Clipsverbindungen am Rahmen gehalten sein, die durch Eindrücken herstellbar sind (Spalte 2, Zeile 61 bis 64). Dieses Profilteil soll zunächst durch einen Handhabungsautomaten mit dem Türrahmen verbunden werden. In einem zweiten, vorzugsweise von Hand durchzuführenden Arbeitsschritt wird dann eine Profildichtung mit einem Aufsteckfuß auf einen hoch stehenden Montageschenkel des Profilteils mit tannenbaumartiger Profilierung aufgesteckt. Die Profildichtung ist innen nicht mit dem L-förmigen Profilteil verbunden. Im Betrieb kann es dort zu optisch ungünstigen Spalten und Verläufen der Profildichtung kommen.

Aus der DE 198 03 445 A1 ist ein Türumfangsrahmenbauteil mit einer Spaltdichtungsanordnung bekannt, wobei der Türrahmen mit einer Fassungsschiene für den Haltebereich eines Dichtungsprofils versehen ist, wobei an dem Haltebereich des Profils ein mit der Türeinfassung zusammenwirkender Dichtbereich befestigt ist, der gegenüber der Fassungsschiene zu einer Innenseite des Spalts hin seitlich versetzt ist und wobei ein von dem Dichtbereich abgewandter Stützabschnitt des Haltebereichs an einem Eckenbereich der Türeinfassung abgestützt ist. Der Stützabschnitt bildet gegenüber dem Eckenbereich keine ausgeprägte Dichtrippe und es wird der als Hohlprofil ausgebildete Dichtbereich im geschlossenen Zustand der Türe unter Überbrückung eines ansonsten bestehenden Spaltes unmittelbar gegen den Türrahmen gepresst.

Aus der DE 197 47 942 ist eine Dichtungsanordnung für den Spalt zwischen einer Türe eines Kraftfahrzeugs und deren Rahmen bekannt, welche durch ein hohl ausgebildetes Dichtungsprofil gekennzeichnet ist, das Ober eine Fassungsschiene mit der genannten Türe formschlüssig in Verbindung steht. Zwischen dem Dichtungsprofil und der Fassungsschiene befindet sich ein werkstoffgleich mit dem Dichtungsprofil-ausgebildeter Haltebereich, und zwar mit der Maßgabe, dass das Dichtungsprofil und die Fassungsschiene fluchtend zueinander angeordnet sind wobei das Dichtungsprofil jedenfalls nicht zur Innenseite des Spaltes hin versetzt ist. Beidseitig an das Dichtungsprofil sind Dichtlippen angesetzt, die an Strukturteilen der Türe anliegen, von denen jedoch keinerlei Stützfunktion ausgeht.

Aus der JP 10 236 163 sowie der EP 0 058 599 sind weitere Dichtungsanordnungen zur Abdichtung des Spaltes zwischen einer Türe und einer Türeinfassung bekannt, bei welchen hohl ausgebildete Dichtungsprofile unter Zwischenanordnung eines Haltebereichs in einer Fassungsschiene formschlüssig gehalten sind, welche an der Türe bzw. dem Rahmen angebracht ist. Das Dichtungsprofil, der Haltebereich und die Fassungsschiene sind bezüglich einer aufzuwendenden Dichtungskraft im Schließzustand der Türen fluchtend zueinander angeordnet. Das Dichtungsprofil ist nicht zur Innenseite des Spaltes hin versetzt angeordnet

Schließlich ist aus der JP 59 089 220 eine weitere Dichtungsanordnung zur Abdichtung des Spaltes zwischen einer Türe und einer Türeinfassung bekannt, bei welcher ein hohl ausgebildetes Dichtungsprofil über einen Haltebereich in einer fest mit der Türe in Verbindung stehenden Fassungsschiene gehalten ist. An dem Haltebereich ist ein Stützabschnitt angeformt, der an Strukturelementen des Türrahmens abgestützt ist, wobei der Stützabschnitt sowie das Dichtungsprofil mit der Maßgabe angeordnet sind, dass im Schließzustand auftretende Verformungskräfte im Wesentlichen über den Stützabschnitt auf Strukturteile der Türen abgeleitet werden.

In Abhängigkeit von der konkreten Herstellung und Einbindung einer Fassungsschiene kann sich das Fertigungsverfahren der jeweiligen Dichtungsanordnung aufwändig gestalten. Von Nachteil ist bei einigen dieser bekannten Dichtungsanordnungen ferner, dass eine Verformung des hohl ausgebildeten Dichtungsprofils in weiten Bereichen unkontrolliert verläuft.

Es ist vor diesem Hintergrund die Aufgabe der Erfindung, eine Dichtungsanordnugn der eingangs bezeichneten Art bei gutem Sitz sowie verbesserter Abdichtwirkung mit Hinblick auf eine kontrollierte Verformung sowie auf eine verbesserte Fertigungsmöglichkeit hin auszugestalten. Gelöst ist diese Aufgabe bei einer solchen Dichtungsanordnung durch die Merkmale des Kennzeichnungsteils des Anspruchs 1.

Der Dichtbereich des erfindungsgemäßen Profils ist vorzugsweise schlauchförmig ausgebildet, wobei durch die relativ zu der Fassungsschiene seitlich versetzte Anordnung des Dichtbereichs die beim Annähern der beiden Bauteile aneinander auftretende Verformungskraft die Wirkung hat, dass der Haltebereich des Profils immer fester in die Fassungsschiene gedrückt wird. Dadurch ist ein dauerhaft sicherer Sitz des Profils an seinem Einbauort gewährleistet Ein Feuchtigkeitsdurchtritt in Richtung auf die Fassungsschiene hin ist durch die an dem genannten Eckenbereich anliegende Dichtrippe gewährleistet. Die genannte Stützrippe tritt spätestens bei Einwirkung einer genügend großen Verformungskraft auf den Dichtbereich in Berührung mit dem ersten Bauteil. Dadurch wird der Dichtbereich abgestützt und seine kontrollierte Verformung unter der Verformungskraft begünstigt. Dadurch, dass die Fassungsschiene aus Blech geformt und durch Rollnahtschweißen an dem ersten Bauteil befestigt ist, ergeben sich fertigungstechnische Vorteile, weil die Fassungsschiene sich leicht und sicher automatisiert an dem ersten Bauteil befestigen lässt. Die Fassungsschiene kann rings um das erste Bauteil herumlaufen. Dabei können die stirnseitigen Enden der Fassungsschienen einander gegenüber abgedichtet, z.B. verschweißt oder mit dauerelastischer Dichtungsmasse überbrückt sein. Bei ausreichender Festigkeit kann die Wanddicke der aus Blech geformten Fassungsschiene vergleichsweise gering sein. Dies begünstigt die Auslegung und Dimensionierung des Haltebereichs des Profils.

Gemäß dem Anspruch 2 besteht die Innenverkleidung vorzugsweise aus einer Kunststofflamelle. Durch die ständige Anlage der Dichtleiste an der Innenverkleidung wird dort die Entstehung eines optisch ungünstigen Spaltes vermieden.

Gemäß dem Anspruch 3 ist mit geringem zusätzlichen Aufwand eine wirksame Abdichtung der Fuge zumindest gegen Staub gewährleistet. Außerdem bietet die Überbrückung der Fuge durch die Fugendichtungslippe einen optisch günstigen Eindruck.

Gemäß dem Anspruch 4 kann z.B. Moosgummi mit einer Härte von 20 bis 30 Shore A verwendet werden.

Das Profil gemäß dem Anspruch 5 wird vorzugsweise im Duplexverfahren koextrudiert. Dabei kann das Weichgummi eine Härte von 60 bis 80 Shore A und das Moosgummi eine Härte von z.B. 15 bis 30 Shore A aufweisen. So ist einerseits für einen sicheren Halt des Profils in der Fassungsschiene und andererseits für geringe Schließkräfte gesorgt, weil der Dichtbereich sich vergleichsweise leicht verformen lässt.

Die Ausbildung der Fassungsschiene gemäß einem der Ansprüche 6 bis 10 wird je nach den Besonderheiten des Einsatzfalles zweckmäßig gewählt. In jedem Fall ergeben sich eine einfache und schnelle Montage sowie ein fester Sitz des Profils an der Fassungsschiene.

Diese und weitere Merkmale und Vorteile der Erfindung werden nachfolgend anhand der in den Zeichnungen dargestellten Ausführungsbeispiele näher erläutert. Es zeigt
Fig. 1 in vergrößerter Darstellung einen Querschnitt durch eine erste Ausführungsform der Dichtungsanordnung mit zugehörigem ersten und zweiten Bauteil,
Fig. 2 bis 4 jeweils einen Querschnitt entsprechend Fig. 1 durch andere Ausführungsformen der Dichtungsanordnung.

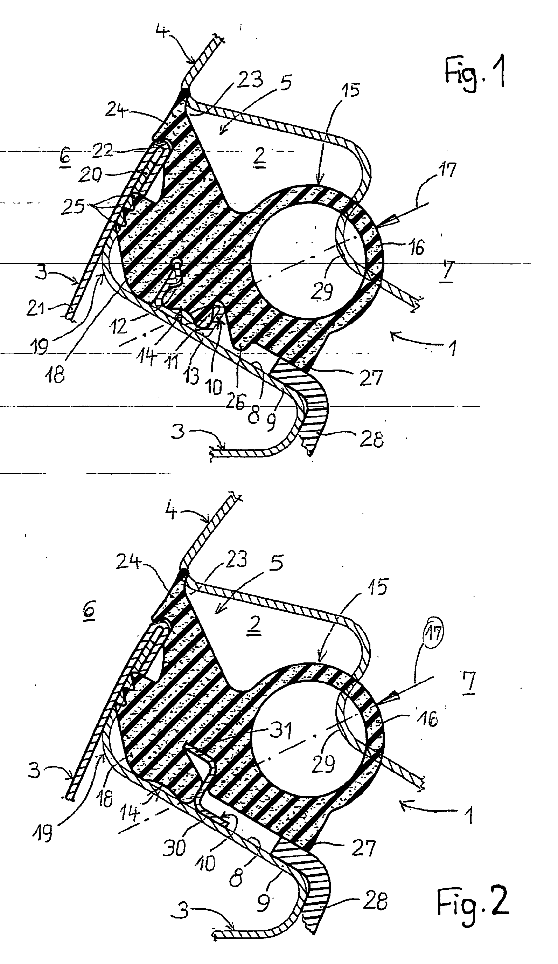

Fig. 1 zeigt eine Dichtungsanordnung 1 zur Abdichtung eines Spalts 2 zwischen einem ersten Bauteil 3 und einem zweiten Bauteil 4. In allen in den Figuren 1 bis 4 dargestellten Ausführungsbeispielen handelt es sich bei dem ersten Bauteil 3 um eine Tür und bei dem zweiten Bauteil 4 um einen Rand einer zu verschließenden Öffnung 5 eines Kraftfahrzeugs. Die Fig. 1 bis 4 stellen jeweils einen Querschnitt durch einen Dachrahmen als zweites Bauteil 4 und durch einen oberen Rand der Tür als erstes Bauteil 3 dar. Eine Außenseite 6 und eine Innenseite 7 des Kraftfahrzeugs sind angedeutet.

Auf einer Oberseite 8 eines Türinnenblechs 9 des ersten Bauteils 3 ist durch Rollnahtschweißen eine Fassungsschiene 10 aus Blech befestigt. Die Fassungsschiene 10 weist eine im Wesentlichen U-förmige Querschnittsfläche mit zueinander hin eingezogenen Randbereichen 11 und 12 auf und ist mit einer Basis 13 mit der Oberseite 8 verschweißt.

Mit der Fassungsschiene 10 ist ein Haltebereich 14 eines Profils 15 formschlüssig verrastet. An dem Haltebereich 14 ist ein mit dem zweiten Bauteil 4 in diesem Fall einem Dachrahmenprofil - abdichtend zusammenwirkender Dichtbereich 16 des Profils 15 befestigt. Der Dichtbereich 16 ist schlauchförmig ausgebildet und besteht wie der Haltebereich 14 aus Moosgummi. Der Dichtbereich 16 ist gegenüber der Fassungsschiene 10 zur Innenseite 7 hin seitlich versetzt angeordnet. Die Resultierende 17 einer auf den Dichtbereich 16 einwirkenden Verformungskraft verläuft zumindest annähernd durch die Fassungsschiene 10, wie dies mit der strichpunktiert eingetragenen Wirkungslinie der Resultierenden 17 angedeutet ist.

Ein von dem Dichtbereich 16 abgewandter Stützabschnitt 18 des Haltebereichs 14 ist an einem Eckenbereich 19 des ersten Bauteils 3 abgestützt. Der Eckenbereich 19 ist dadurch geschaffen, dass das Türinnenblech 9 um etwa 90° nach oben hin abgewinkelt ist. Über einen freien Rand 20 des Türinnenblechs 9 ist ein Türaußenblech 21 des ersten Bauteils 3 gebördelt. Dadurch bildet das Türaußenblech 21 einen Rand 22, der bei geschlossenem, als Tür oder Verschlusselement ausgebildetem ersten Bauteil 3 eine Fuge 23 mit dem gegenüberliegenden zweiten Bauteil 4 definiert. An dem Rand 22 ist eine an das Profil 15 angeformte Fugendichtungslippe 24 verankert. Bei geschlossenem Verschlusselement 3 liegt die ebenfalls aus Moosgummi bestehende Fugendichtungslippe 24 zur Abdichtung der Fuge 23 an dem zweiten Bauteil 4 an. Bei geschlossenem Verschlusselement 3 dichtet daher die Fugendichtungslippe 24 die Fuge 23 zumindest gegen Staub ab. Außerdem erhält man eine optisch günstige Überbrückung der Fuge 23.

Der Stützabschnitt 18 ist zur Außenseite 6 hin mit drei zueinander parallelen Dichtrippen 25 versehen, die dichtend an einer Innenseite des ersten Bauteils 3 anliegen.

Das Profil 15 ist zwischen dem Dichtbereich 16 und dem Türinnenblech 9 des ersten Bauteils 3 mit einer Stützrippe 26 versehen. Bei entspanntem Profil 15, wie in Fig. 1 trotz des geschlossenen Verschlusselements 3 gezeichnet, befindet sich die Stützrippe 26 in einem geringen Abstand von der Oberseite 8 des Türinnenblechs 9. Dies verfolgt den Zweck, dass eine an den Dichtbereich 16 angeformte Dichtleiste 27 auch bei entspanntem Profil 15 unter einer gewissen Vorspannung an einer Innenverkleidung 28 des ersten Bauteils 3 anliegt. Die Innenverkleidung 28 besteht aus einer Kunststofflamelle, die das erste Bauteil 3 an der Innenseite 7 bedeckt. Erst, wenn das Verschlusselement 3 geschlossen und in Richtung der Resultierenden 17 eine Verformungskraft auf das Profil 15 ausgeübt wird, tritt die Stützrippe 26 in Berührung mit der Oberseite 8 des Türinnenblechs 9. Dadurch findet zur Verbesserung der Abdichtwirkung des Dichtbereichs 16 eine Abstützung des Dichtbereichs 16 auch unmittelbar an dem Türinnenblech 9 statt. Diese Abdichtwirkung wird noch durch einen in Richtung des Dichtbereichs 16 vorspringenden Wulst 29 des zweiten Bauteils 4 verbessert.

In allen Figuren der Zeichnungen sind gleiche Teile mit gleichen Bezugszahlen versehen,

In Fig. 2 weist die Fassungsschiene 10 eine im Wesentlichen Z-förmige Querschnittsfläche auf, wobei ein Basisschenkel 30 an dem Türinnenblech 9 befestigt ist. Diese Befestigung kann vorzugsweise, wie bei allen Ausführungsformen, wieder durch Rollnahtschweißen geschehen, aber auch auf andere Weise, z.B. durch Kleben. Ein zweiter Schenkel 31 der Fassungsschiene 10 weist mit seiner freien Endkante nach außen in den Eckenbereich 19 des ersten Bauteils 3. So kann der Haltebereich 14 des Profils 15 den zweiten Schenkel 31 in der in Fig. 2 gezeichneten Weise zur besseren Verankerung des Profils 15 untergreifen.

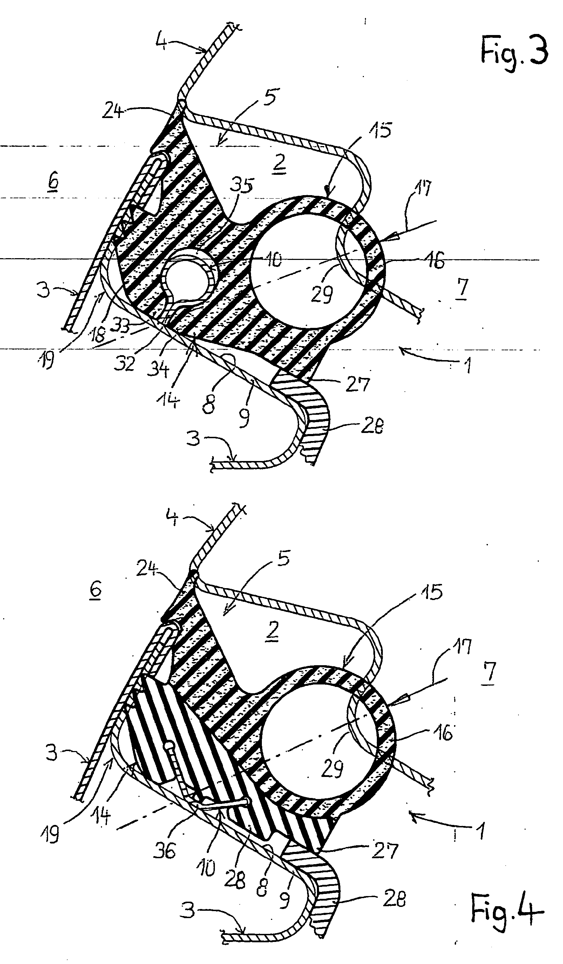

Bei dem Ausführungsbeispiel gemäß Fig. 3 weist die Fassungsschiene 10 eine im Wesentlichen kreisringförmige Querschnittsfläche auf, die über einen Verbindungssteg 32 an dem Türinnenblech 9 befestigt, insbesondere durch Rollnahtschweißen angeschweißt, ist. Im Bereich des Verbindungsstegs 32 wird die Fassungsschiene 10 von Verankerungsleisten 33 und 34 des Haltebereichs 14 berührt. Damit diese Unterklammerung des kreisringförmigen Teils der Fassungsschiene 10 um so besser funktioniert, ist an der von dem Verbindungssteg 32 abgewandten Seite der Fassungsschiene 10 ein im Querschnitt sichelförmiger Freiraum 35 in dem Profil 15 vorgesehen.

Gemäß Fig. 4 weist die Fassungsschiene 10 eine im Wesentlichen V-förmige Querschnittfläche auf, wobei ein Scheitelbereich 36 der Fassungsschiene 10 an dem Türinnenblech 9 - vorzugsweise durch Rollnahtschweißen - befestigt ist.

In Fig. 4 ist das Profil 15 im Duplexverfahren einerseits aus Moosgummi für den Sichtbereich 16 und die Fugendichtungslippe 24 und andererseits aus Weichgummi für den Haltebereich 14 koextrudiert. Bei entspanntem Profil 15, wie in Fig. 4 gezeichnet, ist auch hier die Stützrippe 26 in einem geringen Abstand von der Oberseite 8 des Türinnenblechs 9 angeordnet. Die Stützrippe 26 tritt erst dann in Berührung mit der Oberseite 8, wenn eine gewisse Schließkraft in Richtung der Resultierenden 17 durch den Wulst 29 auf den Dichtbereich 16 ausgeübt wird. Vorzugsweise ist das Weichgummi des Haltebereichs von größerer Härte als das Moosgummi des Restes des Profils 15. So erhält man eine besonders stabile Verankerung des Profils 15 an dem ersten Bauteil 3.

## Patentansprüche

1. Dichtungsanordnung (1) für einen Spalt (2) zwischen zwei relativ zueinander bewegbaren Bauteilen (3,4), z.B. einem Verschlusselernent, wie z.B. einer Tür oder einer Klappe eines Kraftfahrzeugs, und einem Rand einer zu verschließenden Öffnung (5),
wobei an einem ersten (3) der Bauteile (3,4) eine Fassungsschiene (10) festlegbar ist,
wobei mit der Fassungsschiene (10) ein Haltebereich (14) eines Profils (15) formschlüssig verrastet ist,
wobei an dem Haltebereich (14) ein mit einem zweiten (4) der Bauteile (2,3) abdichtend zusammenwirkender Dichtbereich (16) des Profils (15) befestigt ist, der im montierten Zustand gegenüber der Fassungsschiene (10) zu einer innenseite (7) des Spalts (2) hin seitlich versetzt angeordnet ist,
wobei die Resultierende (17) auf den Dichtbereich (16) einwirkender Verformungskräfte zumindest annähernd durch die Fassungsschiene (10) verläuft,
und wobei ein von dem Dichtbereich (16) abgewandter Stützabschnitt (18) des Haltebereichs (14) im montierten Zustand an einem Eckenbereich (19) des ersten Bauteils (3) abgestützt ist,
**dadurch gekennzeichnet,**
**dass** die Fassungsschiene (10) aus Blech geformt und durch Rollnahtschweißen an dem ersten Bauteil (3) zubefestigen ist,
**dass** der Stützabschnitt (18) wenigstens eine Dichtrippe (25) aufweist, die im montierten Zustand an dem Eckenbereich (19) anliegt und
**dass** das Profil (15) eine Stützrippe (26) aufweist, die im montierten Zustand zwischen dem Dichtbereich (16) und dem ersten Bauteil (3) angeordnet ist mit dem ersten Bauteil (3) zumindest bei geschlossenem Verschlusselement (3) in Berührung steht und bei entspannten Profil (15) in einem Abstand von der Oberseite (8) des ersten Bauteils (3) sich befindet.

2. Dichtungsanordnung (1) nach Anspruch 1,
**dadurch gekennzeichnet, dass** das erste Bauteil (3) innen (7) mit einer Innenverkleidung (28) bedeckt ist, und
dass das Profil (15) zwischen dem Dichtbereich (16) und der Innenverkleidung (28) eine ständig abdichtend an der Innenverkleidung (28) anliegende Dichtleiste (27) aufweist.

3. Dichtungsanordnung nach Anspruch 1 oder 2,
**dadurch gekennzeichnet, dass** der Spalt (2) bei geschlossenem Verschlusselement (3) außen (7) in einer Fuge (23) zwischen den Bauteilen (2,3) endet,
dass an einem an die Fuge (23) angrenzenden Rand (22) des ersten Bauteils (3) eine an das Profil (15) angeformte Fugendichtungslippe (24) verankert ist, und
dass bei geschlossenem Verschlusselement (3) die Fugendichtungslippe (24) zur Abdichtung der Fuge (23) an dem zweiten Bauteil (4) anliegt.

4. Dichtungsanordnung nach einem der Ansprüche 1 bis 3,
**dadurch gekennzeichnet, dass** das Profil (15) aus Moosgummi besteht.

5. Dichtungsanordnung nach einem der Ansprüche 1 bis 3,
**dadurch gekennzeichnet, dass** der Haltebereich (14) aus Weichgummi und der Dichtbereich (16) aus Moosgummi bestehen.

6. Dichtungsanordnung nach einem der Ansprüche 1 bis 5,
**dadurch gekennzeichnet, dass** die Fassungsschiene (10) eine im Wesentlichen U-förmige Querschnittsfläche mit zueinander hin eingezogenen Randbereichen (11,12) aufweist,
und dass die Fassungsschiene (10) mit einer Basis (13) an dem ersten Bauteil (3) befestigt ist

7. Dichtungsanordnung nach einem der Ansprüche 1 bis 5,
**dadurch gekennzeichnet, dass** die Fassungsschiene (10) eine im Wesentlichen Z-förmige Querschnittsfläche aufweist,
und dass ein Basisschenkel (30) der Fassungsschiene (10) an dem ersten Bauteil (3) befestigt ist.

8. Dichtungsanordnung nach Anspruch 7,
**dadurch gekennzeichnet, dass** sich ein zweiter Schenkel (31) der Fassungsschiene (10) mit seiner freien Endkante nach außen (6) in einen Eckenbereich (19) des ersten Bauteils (3) hin erstreckt.

9. Dichtungsanordnung nach einem der Ansprüche 1 bis 5,
**dadurch gekennzeichnet, dass** die Fassungsschiene (10) eine im Wesentlichen kreisringförmige Querschnittsfläche aufweist, die über einen Verbindungssteg (32) an dem ersten Bauteil (3) befestigt.

10. Dichtungsanordnung nach einem der Ansprüche 1 bis 5,
**dadurch gekennzeichnet, dass** die Fassungsschiene (10) eine im Wesentlichen V-förmige Querschnittsfläche aufweist,
und dass ein Scheitelbereich (36) der Fassungsschiene (10) an dem ersten Bauteil (3) befestigt ist.

## Claims

1. Sealing arrangement (1) for sealing a gap (2) between two components (3, 4) which can be moved relative to one another, e.g. a closure element, such as e.g. a door or a hatch of a motor vehicle, and an edge of an opening (5) which is to be closed, wherein a mounting rail (10) can be fixed on a first one (3) of the components (3, 4), wherein a holding region (14) of a profile (15) is positively locked to the mounting rail (10),
wherein attached to the holding region (14) is a sealing region (16) of the profile (15) which sealingly cooperates with a second one (4) of the components (2, 3) and which in the mounted state is disposed in a laterally offset manner with respect to the mounting rail (10) towards an inner side (7) of the gap (2),
wherein the resultant (17) of deformation forces which act upon the sealing region (16) extends at least approximately through the mounting rail (10),
and wherein a support portion (18) of the holding region (14) remote from the sealing region (16) is supported in the mounted state on a corner region (19) of the first component (3),
**characterised in that**
the mounting rail (10) is formed from sheet metal and is to be attached by roll seam welding to the first component (3),
the support portion (18) comprises at least one sealing rib (25) which lies against the corner region (19), and
the profile (15) comprises a support rib (26) which is disposed between the sealing region (16) and the first component (3), is in contact with the first component (3) at least when the closure element (3) is closed and, when the profile (15) is relieved, is located at a spaced interval from the topside (8) of the first component (3).

2. Sealing arrangement (1) as claimed in claim 1,
**characterised in that** the first component (3) is covered on the inside (7) with an inner lining (28), and
between the sealing region (16) and the inner lining (28) the profile (15) comprises a sealing strip (27) which lies continuously in a sealing manner against the inner lining (28).

3. Sealing arrangement as claimed in claim 1 or 2,
**characterised in that** when the closure element (3) is closed the gap (2) terminates on the outside (7) in a joint (23) between the components (2, 3),
a joint sealing lip (24) which is integrally formed on the profile (15) is anchored on an edge (22) of the first component (3) which adjoins the joint (23), and
when the closure element (3) is closed the joint sealing lip (24) lies against the second component (4) in order to seal the joint (23).

4. Sealing arrangement as claimed in any one of claims 1 to 3,
**characterised in that** the profile (15) consists of cellular rubber.

5. Sealing arrangement as claimed in any one of claims 1 to 3,
**characterised in that** the holding region (14) consists of soft rubber and the sealing region (16) consists of cellular rubber.

6. Sealing arrangement as claimed in any one of claims 1 to 5,
**characterised in that** the mounting rail (10) comprises a substantially U-shaped cross-sectional surface having edge regions (11, 12) which are retracted towards one another,
and the mounting rail (10) is attached with a base (13) to the first component (3).

7. Sealing arrangement as claimed in any one of claims 1 to 5,
**characterised in that** the mounting rail (10) comprises a substantially Z-shaped cross-sectional surface,
and a base limb (30) of the mounting rail (10) is attached to the first component (3).

8. Sealing arrangement as claimed in claim 7,
**characterised in that** a second limb (31) of the mounting rail (10) extends with its free end edge outwardly (6) into a corner region (19) of the first component (3).

9. Sealing arrangement as claimed in any one of claims 1 to 5,
**characterised in that** the mounting rail (10) comprises a substantially circular ringshaped cross-sectional surface which is attached via a connecting web (32) to the first component (3).

10. Sealing arrangement as claimed in any one of claims 1 to 5,
**characterised in that** the mounting rail (10) comprises a substantially V-shaped cross-sectional surface,
and an apex region (36) of the mounting rail (10) is attached to the first component (3).

## Revendications

1. Dispositif d'étanchéité (1) pour une fente (2) entre deux éléments (3, 4) qui peuvent se déplacer l'un par rapport à l'autre, par exemple un élément de fermeture comme, par exemple une porte ou un hayon d'un véhicule automobile, et un bord d'une ouverture (5) qu'il s'agit de fermer,
dans lequel un rail de fixation (10) peut être fixé à un premier (3) des éléments (3, 4),
dans lequel une région de retenue (14) d'un profilé (15) est verrouillée sur le rail de fixation (10) par complémentarité de forme,
dans lequel, à la région de retenue (14) est fixée une région d'étanchéité (16) du profilé (15) qui coopère avec un deuxième (4) des éléments (2, 3) en formant joint étanche et qui, à l'état monté, est décalée latéralement vers un côté intérieur (7) de la fente (2) par rapport au rail de fixation (10),
dans lequel la résultante (17) de forces de déformation agissant sur la région d'étanchéité (16) passe au moins approximativement par le rail de fixation (10),
et dans lequel, à l'état monté, un segment d'appui (18) de la région de retenue (14) qui est éloigné de la région d'étanchéité (16) est appuyé contre une région d'angle (19) du premier élément (3),
**caractérisé**
**en ce que** le rail de fixation (10) est formé en tôle et doit être fixé au premier élément (3) par soudage à la molette,
**en ce que** le segment d'appui (18) présente au moins une lèvre d'étanchéité (25) qui s'appuie contre la région d'angle (19) et
**en ce que** le profilé (15) présente une nervure d'appui (26) qui est disposée entre la région d'étanchéité (16) et le premier élément (3), est en contact avec le premier élément (3) au moins lorsque l'élément de fermeture (3) est fermé et se trouve à distance de la face supérieure (8) du premier élément (3) lorsque le profilé (15) est détendu.

2. Dispositif d'étanchéité (1) selon la revendication 1,
**caractérisé en ce que,** sur le côté intérieur (7), le premier élément (3) est recouvert (7) d'un habillage intérieur (28), et
**en ce que** le profilé (15) présente, entre la région d'étanchéité (16) et l'habillage intérieur (28), une nervure d'étanchéité (27) qui est en permanence en appui à joint étanche contre l'habillage intérieur (28).

3. Dispositif d'étanchéité selon la revendication 1 ou 2,
**caractérisé en ce que,** lorsque l'élément de fermeture (3) est fermé, la fente (2) se termine à l'extérieur (7) par un joint (23) entre les éléments (2, 3),
**en ce qu'**une lèvre (24) d'étanchéité de joint venue de formage sur le profilé (15) est ancrée à un bord (22) du premier élément (3) qui est adjacent au joint (23), et
**en ce que**, lorsque l'élément de fermeture (3) est fermé, la lèvre (24) d'étanchéité de joint est en appui contre le deuxième élément (4) pour assurer la fermeture étanche du joint (23).

4. Dispositif d'étanchéité selon l'une des revendications 1 à 3,
**caractérisé en ce que** le profilé (15) est fait de caoutchouc cellulaire.

5. Dispositif d'étanchéité selon l'une des revendications 1 à 3,
**caractérisé en ce que** la région de retenue (14) est faite de caoutchouc souple et la région d'étanchéité (16) est faite de caoutchouc cellulaire.

6. Dispositif d'étanchéité selon l'une des revendications 1 à 5,
**caractérisé en ce que** le rail de fixation (10) présente une surface de section transversale pratiquement en forme de U avec des régions de bord (11, 12) resserrées l'une vers l'autre,
et **en ce que** le rail de fixation (10) est fixé au premier élément (3) par une base (13).

7. Dispositif d'étanchéité selon l'une des revendications 1 à 5,
**caractérisé en ce que** le rail de fixation (10) présente une surface de section transversale pratiquement en forme de Z,
et **en ce qu'**une branche (30) de base du rail de fixation (10) est fixée au premier élément (3).

8. Dispositif d'étanchéité selon la revendication 7,
**caractérisé en ce que,** par son bord terminal libre, une deuxième branche (31) du rail de fixation (10) s'étend vers l'extérieur (6) en s'engageant dans une région d'angle (19) du premier élément (3).

9. Dispositif d'étanchéité selon l'une des revendications 1 à 5,
**caractérisé en ce que** le rail de fixation (10) présente une surface de section transversale pratiquement en forme de couronne de cercle, qui est fixée au premier élément (3) par l'intermédiaire d'une nervure de liaison (32).

10. Dispositif d'étanchéité selon l'une des revendications 1 à 5,
**caractérisé en ce que** le rail de fixation (10) présente une surface de section transversale pratiquement en forme de V,
et **en ce qu'**une région de sommet (36) du rail de fixation (10) est fixée au premier élément (3).
